# EUROPEAN PATENT SPECIFICATION

(11) **EP 2 658 185 B1**
(45) Date of publication and mention of the grant of the patent: **21.11.2018**
(21) Application number: 11852136.8
(22) Date of filing: 05.09.2011
(51) Int. Cl.: H04L 12/18, H04Q 11/00

(54) **METHOD AND APPARATUS FOR TRANSMITTING MULTICAST PREVIEW SERVICES**
VERFAHREN UND VORRICHTUNG ZUR ÜBERTRAGUNG VON MULTICAST-VORSCHAUDIENSTEN
PROCÉDÉ ET APPAREIL POUR ENVOYER DES SERVICES DE PRÉVISUALISATION DE MULTIDIFFUSION

(30) Priority: 23.12.2010 CN 201010606055
(43) Date of publication of application: 30.10.2013
(73) Proprietor: ZTE Corporation, Shenzhen, Guangdong 518057 (CN)
(72) Inventor: ZHANG, Dezhi, Guangdong 518057 (CN); ZENG, Tao, Guangdong 518057 (CN)
(74) Representative: Novagraaf Technologies
(86) International application number: PCT/CN2011/079334
(87) International publication number: WO 2012/083729

(56) References cited:
- CN-A- 1 395 388
- CN-A- 101 237 383
- CN-A- 101 877 803
- DAVE HOOD ERICSSON AB SWEDEN SHAO YAN CHINA UNICOM CHINA ZHANG DEZHI ZTE CORPORATION CHINA ZENG TAO ZTE CORPORATION CHINA: "Proposal to support multicast preview function in G.988", ITU-T DRAFT ; STUDY PERIOD 2009-2012, INTERNATIONAL TELECOMMUNICATION UNION, GENEVA ; CH, vol. 2/15, 26 August 2010 (2010-08-26), pages 1-4, XP017448103, [retrieved on 2010-08-26]
- "ONU management and control interface (OMCI) specification; G.988 (10/10)", ITU-T STANDARD, INTERNATIONAL TELECOMMUNICATION UNION, GENEVA ; CH, no. G.988 (10/10), 7 October 2010 (2010-10-07), pages 1-552, XP017575708, [retrieved on 2011-09-19]
- DAVE HOOD ERICSSON AB SWEDEN: "Draft Amendment 1 to Recommendation ITU-T G.988 (2010) (for consent);TD 371 Rev.2 (PLEN/15)", ITU-T DRAFT ; STUDY PERIOD 2009-2012, INTERNATIONAL TELECOMMUNICATION UNION, GENEVA ; CH, vol. 2/15, 22 February 2011 (2011-02-22), pages 1-75, XP017573401, [retrieved on 2011-02-22]
- 'ITU-T G.988: ONU management and control interface (OMCI) specification' ITU 31 October 2010, page 150, XP017575708

## Description

### Technical Field

The present invention relates to the field of Gigabit Passive Optical Network (GPON) communication, and in particular to a method and a device for transmitting a multicast preview service.

### Background

The GPON is a wideband access technology which is of a point-to-multipoint network structure, adopts passive fiber transmission mode and GPON Encapsulation Method (GEM) based frame encapsulation, and provides various comprehensive services. The GPON consists of a central office apparatus, i.e., an Optical Line Terminal (OLT), a user end apparatus, i.e. an Optical Network Unit (ONU), and an Optical Distribute Network (ODN). In recent years, with the massive application of the GPON technology, how to develop controllable multicast services on the GPON becomes a subject worthy of study.

A GEM encapsulation port (referred to as Gem port hereinafter) is a logic channel bearing GPON services. The Gem port has a plurality of mapping modes and can be associated with user port, Virtual Local Area Network Identifier (VLAN Identifier, abbreviated as VID) and Ethernet priority. One ONU can be configured with a plurality of Gem ports, including unicast Gem port and multicast Gem port. The multicast Gem port can be received by all the ONUs to which the multicast groups under one PON port belongs. An uplink multicast protocol message is identified through a unicast Gem port, and a downlink multicast data protocol message is transmitted to all ONUs adopting a Single Copy Broadcast (SCB) mode through the multicast Gem port. A distribution control point of the multicast services is provided on an ONU apparatus.

At present, a control mode defined by a GPON international standard ITU-T G984.4 is a distributed protocol control mode in which an authority list is distributed in advance, that is, the OLT sets a multicast authority control list (a list of multicast channels that a user can access) of the ONU apparatus through an Optical Network Terminal Management and Control Interface (ONT Management and Control Interface, abbreviated as OMCI), and associates the list to a user port to perform service configuration. The ONU runs Internet Group Management Protocol (IGMP) Snooping. When a multicast group that a user requests is present in the multicast authority control list, the ONU allows the user to join; otherwise, the ONU rejects the user to join. In this way, the purpose of filtering invalid multicast data is achieved.

With the opening of operator services and the apparatus being more platform-based, new independent Service Provider (SP) appears continuously to provide various types of multicast services for terminal users. Therefore, it is necessary to extend the existing control protocol, so that the terminal user can select, through an access system, to buy and watch the needed services from a service group provided by multiple SPs.

At present, for an apparatus connected on the PON port and containing a plurality of User Network Interface (UNI) interfaces, the following two management objects are defined in G988 OMCI standards to perform management and control:
1) Multicast Operations Profile (MOP) management object, which stores various multicast control policies, for example, the control information of the SP provided multicast services, which is stored in a dynamic access control list table of the MOP management object, and the multicast protocol and version used by users;
2) Multicast Subscriber Control (MSC) management object, which stores control parameters related to each UNI interface of the apparatus and one pointer pointing to the MOP management object.

During specific management use, since the MSC can point to one MOP management object only at present, thus, for one UNI interface, the control parameters of all SP provided multicast services owned by a user at this UNI interface should be covered by the configuration of one MSC management object and one MOP management object only while multicast polices are configured. In this way, problems as follows are caused.
1) If the user uses a plurality of multicast protocol versions such as IGMPv3 (used in IPv4 environment) and MLDv2 protocol (used in IPv6 environment) in an IPv4/IPv6 coexisting environment, the requirement of the dual configuration of the protocol can not be achieved for the MSC points to one single MOP.
2) If multiple UNI interfaces of the apparatus use a multicast service provided by a certain SP simultaneously, the SP multicast service configuration data exist in different MOP management objects corresponding to the different UNI interfaces. If the SP adjusts the multicast service policy, it is needed to modify the data in the MOP correspondingly, then, the OLT needs to communicate with the ONU for many times to modify all the corresponding MOP management objects related to the UNI interfaces. For example, if 32 UNI interfaces have demanded a multicast service of a certain SP in an MDU, then, when one control parameter of this SP multicast service is modified, at least 32 OMCI messages need to be interacted between the OLT and the ONU to perform modification. In this mechanism, a large number of messages are needed, the speed is low, and resources and time are wasted.
3) The dynamic access control list table of the original MOP defines relative less space for parameters, and thus can not support the flexible operation and control of future new services such as multicast preview.

The related document (CN 101877803A) provides a method, system and apparatus for implement multicast preview; the related document (proposal to support multicast preview function in G.988) proposes to support multicast preview function in G.988. However, the above mentioned problem still remains unsolved by the above mentioned documents.

### Summary

The present invention provides a method and a device, in accordance with independent claims 1 and 12, respectively, for transmitting a multicast preview service, which at least solve the above problems.

According to one aspect of the present invention, a method for transmitting a multicast preview service is provided, including: looking up, in a management object and/or attributes of the management object, an attribute carried in a multicast joining request message according to a predetermined sequence, wherein the management object and/or the attributes of the management object includes at least one of the following: Multicast Operations Profile (MOP), an authorization group of Extension Multicast Operations Profile (EMOP), an Allowed preview groups table of Multicast Subscriber Control (MSC), and a preview group of EMOP; forwarding or stopping forwarding to a user a service requested by the multicast joining request message according to a lookup result.

The step of looking up, in the management object and/or the attributes of the management object, the attribute carried in the multicast joining request message according to the predetermined sequence includes: looking up the attribute carried in the multicast joining request message in the following in turn: the MOP, the authorization group of the EMOP, the Allowed preview groups table of the MSC, and the preview group of the EMOP.

The attribute carried in the multicast joining request message refers to a service related attribute carried in the multicast joining request message.

The step of looking up, in the MOP, the attribute carried in the multicast joining request message includes: looking up, in the MOP, the attribute carried in the multicast joining request message; if the attribute carried in the multicast joining request message is found, forwarding the service to the user.

The step of looking up, in the authorization group of the EMOP, the attribute carried in the multicast joining request message includes: looking up, in a Multicast service package table of the MSC, the attribute carried in the multicast joining request message; if the attribute is found, acquiring a service related attribute according to a EMOP management object instance pointer in the attribute; if the acquired attribute is Authorized, forwarding the service to the user.

The step of looking up, in the Allowed preview groups table, the attribute carried in the multicast joining request message includes: looking up, in the Allowed preview groups table, the attribute carried in the multicast joining request message; if the attribute is found, forwarding the service to the user.

The step of looking up, in the preview group of the EMOP, the attribute carried in the multicast joining request message includes: looking up, in a Multicast service package table of the MSC, the attribute carried in the multicast joining request message; if the attribute is found, acquiring a service related attribute according to a EMOP management object instance pointer in the attribute; if the acquired attribute is Preview, forwarding the service to the user.

The step of looking up the attribute includes: looking up a multicast program corresponding to a Virtual Local Area Network Identifier (VID) and/or a source Internet Protocol (IP) address included in a service package.

Before looking up, in the management object and/or the attributes of the management object, the attribute carried in the multicast joining request message according to a predetermined sequence, the method further includes: an Optical Line Terminal (OLT) configuring the management object and/or the attributes of the management object in an Optical Network Unit (ONU); the ONU receiving the multicast joining request message; wherein the ONU executes an operation of looking up, in the management object and/or the attributes of the management object, the attribute carried in the multicast joining request message according the a predetermined sequence.

The step that the OLT configures the management object and/or the attributes of the management object in the ONU includes: adding a Multicast service package table in an MSC management object, wherein the Multicast service package table includes a source IP address item, a VID item and a pointer item which have a mapping relationship with each other, wherein the pointer item records a pointer pointing to an MOP management object instance or a EMOP management object instance.

The step that the OLT configures the management object and/or the attributes of the management object in the ONU further includes: adding the Allowed preview groups table in an MSC management object, wherein the Allowed preview groups table includes a source IP address item, a destination IP address item and a VID item which have a mapping relationship with each other, and is configured to record a preview multicast channel list that a current User Network Interface (UNI) interface allows to preview.

After the OLT configures the management object and/or the attributes of the management object in the ONU, the method further includes: the OLT modifying the management object and/or the attributes of the management object configured in the ONU through a management channel.

The step of the OLT modifying the management object and/or the attributes of the management object configured in the ONU through the management channel includes at least one of the following: establishing and/or deleting, in the Allowed preview groups table of an MSC management object, an item of a EMOP management object instance indicated by the management channel; establishing and/or deleting, in a pointer item of a Multicast service package table of the MSC management object, a pointer pointing to a EMOP management object instance indicated by an Optical Network Terminal Management and Control Interface (OMCI) command.

The management object and/or the attributes of the management object includes: a pointer pointing to the MOP management object instance and/or the EMOP management object instance, wherein each MOP management object instance pointer and/or each EMOP management object instance corresponds to at least one multicast service, at least one Multicast service package table and at least one Allowed preview groups table.

According to another aspect of the present invention, a device for transmitting a multicast preview service is provided, including: a lookup unit, which is configured to look up, in a management object and/or attributes of the management object, an attribute carried in a multicast joining request message according to a predetermined sequence, wherein the management object and/or the attributes of the management object includes at least one of the following: Multicast Operations Profile (MOP), an authorization group of Extension Multicast Operations Profile (EMOP), an Allowed preview groups table of Multicast Subscriber Control (MSC), and a preview group of EMOP; and a transmission unit, which is configured to forward or stop forwarding to a user a service requested by the multicast joining request message according to a lookup result of the lookup unit.

By looking up, in a management object and/or attributes of the management object, an attribute carried in a multicast joining request message according to a predetermined sequence, the present invention can perform authority control on the multicast services of multiple SPs, thereby solving the problem in conventional art that the multicast services of multiple SPs, cannot be managed. The solution of the present invention improves the multicast control method, so as to support the configuration management of the multicast services of multiple SPs in the above apparatus. Moreover, by adding configuration parameters related to multicast service preview, the present invention achieves the technical effect of supporting new services such as new multicast preview.

### Brief Description of the Drawings

Drawings, provided for further understanding of the present invention and forming a part of the specification, are used to explain the present invention together with embodiments of the present invention rather than to limit the present invention, wherein:
Fig. 1 shows a preferred flowchart of a method for controlling a multicast service according to an embodiment of the present invention; and
Fig. 2 shows a preferred structure diagram of a system for controlling a multicast service according to an embodiment of the present invention.

### Detailed Description of the Embodiments

The present invention is described below in detail by reference to the accompanying drawings in conjunction with embodiments. It should be noted that the embodiments in the application and the characteristics of the embodiments can be combined if no conflict is caused.

### Embodiment 1

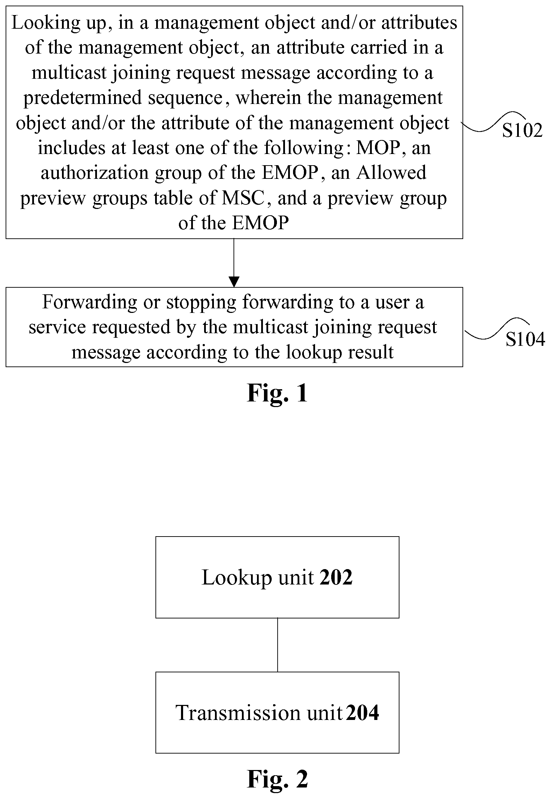

Fig. 1 shows a preferred flowchart of a method for controlling a multicast service according to an embodiment of the present invention. The method includes the following steps:
Step S102: an attribute carried in a multicast joining request message is looked up in a management object and/or attributes of the management object according to a predetermined sequence, wherein the management object and/or the attributes of the management object includes at least one of the following: MOP, an authorization group of Extension Multicast Operations Profile (EMOP), an Allowed preview groups table of MSC, and a preview group of EMOP;
Step S104: according to the lookup result, a service requested by the multicast joining request message is forwarded to a user or the operation of forwarding a service requested by the multicast joining request message to a user is stopped.

In this preferred embodiment, by looking up, in the management object and/or the attributes of the management object, the attribute carried in the multicast joining request message according to a predetermined sequence, the method can effectively perform authority control on the multicast services of multiple SPs, thereby solving the problem in conventional art that the multicast services of multiple SPs cannot be managed. The solution of the present invention improves the multicast control method, so as to support the configuration management of the multicast services of multiple SPs in the above apparatus.

Preferably, the step of looking up, in the management object and/or the attributes of the management object, the attribute carried in the multicast joining request message according to the predetermined sequence includes: the attribute is looked up in the following in turn: the MOP, the authorization group of the EMOP, the Allowed preview groups table, and the preview group of the EMOP. In this preferred embodiment, the needed attribute can be looked up quickly and accurately through the above sequence.

Preferably, the attribute refers to a service related attribute carried in the multicast joining request message.

Preferably, the step of looking up, in the MOP, the attribute carried in the multicast joining request message includes: the attribute is looked up in the MOP; if the attribute is found, the service is forwarded to the user.

Preferably, the step of looking up, in the authorization group of the EMOP, the attribute carried in the multicast joining request message includes: the attribute is looked up in a Multicast service package table of the MSC; if the attribute is found, a service related attribute is acquired according to a EMOP management object instance pointer in the attribute; if the acquired attribute is Authorized, the service is forwarded to the user. In this preferred embodiment, by means of the determination on whether to send the service to the user through authorization, the flexibility of configuration and transmission is improved.

Preferably, the step of looking up, in the Allowed preview groups table, the attribute carried in the multicast joining request message includes: the attribute is looked up in the Allowed preview groups table; if the attribute is found, the service is forwarded to the user. In this preferred embodiment, by means of the determination on whether to allow the user to preview the service through the Allowed preview groups table, control is realized on the preview service.

Preferably, the step of looking up, in the preview group of the EMOP, the attribute carried in the multicast joining request message includes: the attribute is looked up in the Multicast service package table of the MSC; if the attribute is found, a service related attribute is acquired according to a EMOP management object instance pointer in the attribute; if the acquired attribute is Preview, the service is forwarded to the user. In this preferred embodiment, by means of the determination on whether to allow the user to preview the service through the Multicast service package table of the MSC, control is realized on the preview service.

Preferably, the step of looking up the attribute includes: a multicast program corresponding to a VID and/or a source IP address included in the service package is searched.

Preferably, before looking up, in the management object and/or the attributes of the management object, the attribute carried in the multicast joining request message according to a predetermined sequence, the method further includes: an OLT configures the management object and/or the attributes of the management object in an ONU; the ONU receives the multicast joining request message; wherein the ONU executes an operation of looking up, in the management object and/or the attributes of the management object, the attribute carried in the multicast joining request message according the a predetermined sequence.

Preferably, the step that the OLT configures the management object and/or the attributes of the management object in the ONU includes: a Multicast service package table is added in an MSC management object, wherein the Multicast service package table includes a source IP address item, a VID item and a pointer item which have a mapping relationship with each other, wherein the pointer item records a pointer pointing to an MOP management object instance or a EMOP management object instance.

Preferably, the step that the OLT configures the management object and/or the attributes of the management object in the ONU further includes: the Allowed preview groups table is added in an MSC management object, wherein the Allowed preview groups table includes a source IP address item, a destination IP address item and a VID item which have a mapping relationship with each other, and is configured to record a preview multicast channel list that a current User Network Interface (UNI) interface allows to preview. In this preferred embodiment, with the addition of configuration parameters related to multicast service preview, the technical effect of supporting new services such as new multicast preview is achieved.

Preferably, after the OLT configures the management object and/or the attributes of the management object in the ONU, the method for transmitting the multicast preview service further includes: the OLT modifies the management object and/or the attributes of the management object configured in the ONU through a management channel. Preferably, the management channel can be an Optical Network Terminal Management and Control Interface (OMCI) command and the like.

Preferably, the step of the OLT modifying the management object and/or the attributes of the management object configured in the ONU through the management channel includes at least one of the following: an item of a EMOP management object instance indicated by the management channel is established and/or deleted in the Allowed preview groups table of the MSC management object; a pointer pointing to a EMOP management object instance indicated by an OMCI command is established and/or deleted in a pointer item of the Multicast service package table of the MSC management object.

Preferably, the management object and/or the attributes of the management object includes: a pointer pointing to the MOP management object instance and/or the EMOP management object instance, wherein each MOP management object instance pointer and/or each EMOP management object instance corresponds to at least one multicast service, at least one Multicast service package table and at least one Allowed preview groups table.

### Embodiment 2

Fig. 2 shows a preferred structure diagram of a system for controlling a multicast service according to an embodiment of the present invention. The system includes: a lookup unit 202, which is configured to look up, in a management object and/or attributes of the management object, an attribute carried in a multicast joining request message according to a predetermined sequence, wherein the management object and/or the attributes of the management object comprises at least one of the following: MOP, an authorization group of EMOP, an Allowed preview groups table of MSC, and a preview group of EMOP; and a transmission unit 204, which is configured to forward or stop forwarding to a user a service requested by the multicast joining request message according to a lookup result of the lookup unit.

In this preferred embodiment, by looking up, in the management object and/or the attributes of the management object, the attribute carried in the multicast joining request message according to a predetermined sequence, the method can effectively perform authority control on the multicast services of multiple SPs, thereby solving the problem in conventional art that the multicast services of multiple SPs cannot be managed. The solution of the present invention improves the multicast control method, so as to support the configuration management of the multicast services of multiple SPs in the above apparatus.

Preferably, the lookup unit 202 is configured to look up, in the management object and/or the attributes of the management object, the attribute carried in the multicast joining request message according to the following sequence: the lookup unit 202 is configured to look up the attribute in the following in turn: the MOP, the authorization group of the EMOP, the Allowed preview groups table, and the preview group of the EMOP. In this preferred embodiment, the needed attribute can be looked up quickly and accurately through the above sequence.

Preferably, the attribute refers to a service related attribute carried in the multicast joining request message.

Preferably, the lookup unit 202 includes a first lookup module which is configured to look up the attribute in the MOP and notify the transmission unit 204 to forward the service to the user if the attribute is found.

Preferably, the lookup unit 202 includes a second lookup module which is configured to: look up the attribute in a Multicast service package table of the MSC; if the attribute is found, acquire a service related attribute according to a EMOP management object instance pointer in the attribute; if the acquired attribute is Authorized, notify the transmission unit 204 to forward the service to the user. In this preferred embodiment, by means of the determination on whether to send the service to the user through authorization, the flexibility of configuration and transmission is improved.

Preferably, the lookup unit 202 includes a third lookup module which is configured to look up the attribute in the Allowed preview groups table and notify the transmission unit 204 to forward the service to the user if the attribute is found. In this preferred embodiment, by means of the determination on whether to allow the user to preview the service through the Allowed preview groups table, control is realized on the preview service.

Preferably, the lookup unit 202 includes a fourth lookup module which is configured to: look up the attribute in the Multicast service package table of the MSC; if the attribute is found, acquire the service related attribute according to the EMOP management object instance pointer in the attribute; if the acquired attribute is Preview, notify the transmission unit 204 to forward the service to the user. In this preferred embodiment, by means of the determination on whether to allow the user to preview the service through the Multicast service package table of the MSC, control is realized on the preview service.

Preferably, the step of looking up the attribute by the lookup unit 202 specifically includes: a multicast program corresponding to a VID and/or a source IP address included in the service package is searched.

Preferably, before looking up, in the management object and/or the attributes of the management object, the attribute carried in the multicast joining request message according to a predetermined sequence, the system for controlling the multicast service according to the embodiment of the present invention further includes the operations of: an OLT configures the management object and/or the attributes of the management object in an ONU; the ONU receives the multicast joining request message; wherein the ONU executes an operation of looking up, in the management object and/or the attributes of the management object, the attribute carried in the multicast joining request message according the a predetermined sequence. That is to say, the system for controlling the multicast service according to the embodiment of the present invention can be positioned on the ONU.

Preferably, the step that the OLT configures the management object and/or the attributes of the management object in the ONU includes: a Multicast service package table is added in an MSC management object, wherein the Multicast service package table includes a source IP address item, a VID item and a pointer item which have a mapping relationship with each other, wherein the pointer item records a pointer pointing to an MOP management object instance or a EMOP management object instance.

Preferably, the step that the OLT configures the management object and/or the attributes of the management object in the ONU further includes: the Allowed preview groups table is added in an MSC management object, wherein the Allowed preview groups table includes a source IP address item, a destination IP address item and a VID item which have a mapping relationship with each other, and is configured to record a preview multicast channel list that a current User Network Interface (UNI) interface allows to preview. In this preferred embodiment, with the addition of configuration parameters related to multicast service preview, the technical effect of supporting new services such as new multicast preview is achieved.

Preferably, after the OLT configures the management object and/or the attributes of the management object in the ONU, the method for transmitting the multicast preview service further includes: the OLT modifies the management object and/or the attributes of the management object configured in the ONU through a management channel. Preferably, the management channel can be an Optical Network Terminal Management and Control Interface (OMCI) command and the like.

Preferably, the step of the OLT modifying the management object and/or the attributes of the management object configured in the ONU through the management channel includes at least one of the following: an item of a EMOP management object instance indicated by the management channel is established and/or deleted in the Allowed preview groups table of the MSC management object; a pointer pointing to a EMOP management object instance indicated by an OMCI command is established and/or deleted in a pointer item of the Multicast service package table of the MSC management object.

Preferably, the management object and/or the attributes of the management object includes: a pointer pointing to the MOP management object instance and/or the EMOP management object instance, wherein each MOP management object instance pointer and/or each EMOP management object instance corresponds to at least one multicast service, at least one Multicast service package table and at least one Allowed preview groups table.

### Embodiment 3

This embodiment still adopts the management interface definition in the current G.988 OMCI standard. The OLT transmits, to the ONU side, management information related to multicast services and selection control information for the access of multicast services to a user side UNI interface; then, the ONU performs the access management control of a subscriber multicast protocol according to relevant configuration information.
1. In order to support the management control of multicast services of multiple SPs, the OLT needs to configure parameters of multicast service channels, such as, a multicast channel authority control list, in the EMOP management object of the ONU.
   1) In the multicast channel authority control list, an access authority (Watch or Preview) can be designated for each multicast channel, and preview parameters related to preview authority are configured, including preview times, maximum preview duration, and minimum preview interval time.
   2) The ONU performs preview control according to the distributed multicast authority control list.
   3) In actual applications, the MOP may correspond to a single multicast service channel, or may be configured to correspond to multiple multicast service channels provided by one SP, or may correspond to a multicast service channel package provided to a user by operators. In each mode, the OLT only needs to configure each channel parameter in the multicast channel authority control list flexibly (this method is partially illustrated in the standard, and can be processed as conventional art).
   4) Of course, defining based on the original MOP is possible theoretically, however, the addition of too many attributes would cause the MOP to exceed the maximum number of attributes; thus, EMOP is adopted here for illustration.
2. Two new control tables as follows are added in the MSC management object:
   1) Multicast service package table, which contains a list pointing to one or more multicast service packages; the pointer of the MOP management object related to the corresponding multicast service channel package is looked up, by the VID (UNI) of the matched user (i.e. the user connected with the UNI) and the source IP address included in the multicast message;
   2) Allowed preview groups table, which contains a list of preview multicast group channels that the UNI interface allows to preview currently. This table also can represent a list of multicast service channels that the user has paid and can watch. Relevant channels can be identified by VID (ANI) (also can be identified by other parameters that can represent multicast service streams, hereinafter the channels are identified by VID (ANI) uniformly).
3. When receiving a request message of IGMP or MLD protocol, the ONU can query each relevant table according to a sequence so as to find corresponding multicast channel control parameters, and thereby forwards or does not forward the data of the multicast service channel. In this preferred embodiment, query can be performed according to the following sequence:
   1) querying, in the MSC, the MOP management object (the multicast service channel list in the original MOP object) to which the Multicast operations profile pointer points; if a match is found, processing according to relevant parameters; otherwise, going to query a next item;
   2) querying, in the MSC, the EMOP matched in the Multicast service package table; if a match is found, searching an authorized multicast service channel list contained in the EMOP and processing according to relevant parameters; otherwise, going to query a next item;
   3) querying, in the MSC, the Allowed preview groups table; if one multicast program is matched, forwarding the multicast service stream to the user; otherwise, going to query a next item;
   4) querying, in the MSC, the EMOP matched in the Multicast service package table; if a match is found, searching a preview multicast service channel list contained in the EMOP and processing according to relevant parameters; otherwise, considering that all lookups fail and rejecting the multicast service application of the user.

To sum up, the technical scheme of this preferred embodiment makes improvements as follows while keeping the compatibility of the original G.988 OMCI standard:
1) the OLT distributes configured preview authority and the ONU performs multicast service control; and
2. a service authority table and a corresponding query process are established.

By utilizing the above innovation scheme comprehensively, this embodiment can provide multicast preview service control for the MDU in a Fiber to the Building (FTTB) mode effectively.

The technical scheme of this preferred embodiment is described below through specific embodiments.

It is supposed that there are four multicast service providers, namely, SP1, SP2, SP3 and SP4, wherein
1) the multicast service of the SP1 can be played for a user directly without the application of the user;
2) the multicast service of the SP2 provides a preview function, and the user can buy the multicast service after previewing for a while; the user also can exit the multicast service after buying it;
3) the multicast service of the SP3 provides a preview function, and the user can buy the multicast service after previewing for a while; the user also can exit the multicast service after buying it;;
4) the multicast service of the SP4 provides a preview function, and the user can buy the multicast service after previewing for a while; the user also can exit the multicast service after buying it;;
5) the management instance of the MSC management object associated with the user is MSC-1, and the user buys the multicast service provided by the SP2 currently.

Step 1: the OLT configures parameters in the ONU (MDU) through the OMCI channel in the following manner:
1) establishing an MOP management object instance MOP-1, and configuring the multicast service parameter provided by the SP1 in the MOP-1;
2) establishing a EMOP management object instance EMOP-1, and configuring the multicast service control parameter (including preview control parameter) related to the SP2 in the EMOP-1;
3) establishing a EMOP management object instance EMOP-2, and configuring the multicast service control parameter (including preview control parameter) related to the SP3 in the EMOP-2;
4) establishing a EMOP management object instance EMOP-3, and configuring the multicast service control parameter (including preview control parameter) related to the SP4 in the EMOP-3;
5) modifying the Multicast operations profile pointer in the MSC management object instance MSC-1 to point to the MOP-1;
6) establishing the pointer item of the Multicast service package table in the MSC management object instance MSC-1 and making the pointer item point to the EMOP-2 and the EMOP-3 respectively;
7) establishing the pointer item of the Allowed preview groups table in the MSC management object instance MSC-1 and making the pointer item point to the VID (ANI) of the multicast service stream of the SP2 respectively.

At this moment, the established tables are as follows.

**Table 1: Multicast service package table in MSC-1**

| Table control (including index) | Source IP address | VID (UNI) | EMOP pointer | Reserved (other parameters) |
|---|---|---|---|---|
| 1 | UNI-A | 1000 | Pointing to EMOP-2 | |
| 2 | UNI-A | 1000 | Pointing to EMOP-3 | |

**Table 2: Allowed preview groups table in MSC-1**

| Table control (including index) | Source IP address | Destination IP address | VID (UNI) | VID (ANI) | Reserved (other parameters) |
|---|---|---|---|---|---|
| 1 | UNI-A | IP (SP2) | 1000 | 200 | |

Step 2: when the ONU (MDU) apparatus receives from the user an IGMP request message which contains VID, source IP address and SP2 provided multicast service request, the ONU retrieves various multicast authority control lists of the MSC-1 management instance associated with the user. The retrieving process specifically includes:
1) retrieving the MOP-1 to which the Multicast operations profile pointer points, and going to a next step to continue retrieve if not matched out the multicast service provided by the SP2 to which the VID points;
2) retrieving the Multicast service package table, and failing in matching out the pointer pointing to the SP2 related EMOP-1 through the VID and the source IP address;
3) retrieving the Allowed preview groups table, and matching out the pointer pointing to the SP2 related EMOP-1 through the VID and the source IP address. Since the pointer is matched out in the Allowed preview groups table, parameters related to preview control in the EMOP-1 management object instance can be neglected. A corresponding SP2 multicast service stream is forwarded to the user and thus the user can watch the program.

Step 3: if the user cancels the Watch authority of the SP2 multicast service, the operator restores the authority of the user to Preview on the SP2 multicast service; then, the OLT can modify the multicast authority control table in the ONU (MDU) through an OMCI command, so as to achieve the above service control function. The modification process specifically includes:
1) deleting the item pointing to the EMOP-1 in the pointer item of the Allowed preview groups table in the MSC management object instance MSC-1;
2) modifying the pointer item of the Multicast service package table in the MSC management object instance MSC-1 and adding an item pointing to the EMOP-1.

At this moment, relevant tables in the MSC-1 are as follows.

**Table 3: Multicast service package table in MSC-1**

| Table control (including index) | Source IP address | VID (UNI) | EMOP pointer | Reserved (other parameters) |
|---|---|---|---|---|
| 1 | UNI-A | 1000 | Pointing to EMOP-2 | |
| 2 | UNI-A | 1000 | Pointing to EMOP-3 | |
| 3 | UNI-A | 1000 | Pointing to EMOP-1 | |

**Table 4: Allowed preview groups table in MSC-1**

| Table control (including index) | Source IP address | Destination IP address | VID (UNI) | VID (ANI) | Reserved (other parameters) |
|---|---|---|---|---|---|
| | | | | | |

Step 4: when the ONU (MDU) apparatus receives from the user an IGMP request message which contains VID, source IP address and SP2 provided multicast service request, the ONU retrieves various multicast authority control lists of the MSC-1 management instance associated with the user. The retrieving process specifically includes:
1) retrieving the MOP-1 to which the Multicast operations profile pointer points, and going to a next step to continue retrieve if not matched out the multicast service provided by the SP2 to which the VID points;
2) retrieving the Multicast service package table, and matching out the pointer pointing to the SP2 related EMOP-1 through the VID and the source IP address. Since the pointer is matched out in the Multicast service package table, the corresponding SP2 multicast service stream is forwarded to the user according to the parameters related to preview control in the EMOP-1 management object instance, and thus the user can preview the program according to determined rules.

Step 5: if the user buys the Watch authority of the multicast service provided by the SP3 after previewing the multicast service for a while, the operator sets the Watch authority of the user to Allowed on the SP3 multicast service. At this moment, the OLT can modify the multicast authority control table in the ONU (MDU) through an OMCI command, so as to achieve the above service control function. The modification process specifically includes:
1) deleting the item pointing to the EMOP-2 in the pointer item of the Multicast service package table in the MSC management object instance MSC-1;
2) modifying the pointer item of the Allowed preview groups table in the MSC management object instance MSC-1 and adding an item pointing to the EMOP-2.

At this moment, relevant tables in the MSC-1 are as follows.

**Table 5: Multicast service package table in MSC-1**

| Table control (including index) | Source IP address | VID (UNI) | EMOP pointer | Reserved (other parameters) |
|---|---|---|---|---|
| | | | | |
| 2 | UNI-A | 1000 | Point to EMOP-3 | |
| 3 | UNI-A | 1000 | Point to EMOP-1 | |

**Table 6: Allowed preview groups table in MSC-1**

| Table control (including index) | Source IP address | Destination IP address | VID (UNI) | VID (ANI) | Reserved (other parameters) |
|---|---|---|---|---|---|
| 1 | UNI-A | IP (SP3) | 1000 | 300 | |
| | | | | | |
| | | | | | |

Step 6: when the ONU (MDU) apparatus receives from the user an IGMP request message which contains VID, source IP address and SP3 provided multicast service request, the ONU retrieves various multicast authority control lists of the MSC-1 management instance associated with the user. The retrieving process specifically includes:
1) retrieving the MOP-1 to which the Multicast operations profile pointer points, and going to a next step to continue retrieve if not matched out the multicast service provided by the SP3 to which the VID points;
2) retrieving the Multicast service package table, and failing in matching out the pointer pointing to the SP3 related EMOP-2 through the VID and the source IP address;
3) retrieving the Allowed preview groups table, and matching out the pointer pointing to the SP3 related EMOP-3 through the VID and the source IP address. Since the pointer is matched out in the Allowed preview groups table, parameters related to preview control in the EMOP-2 management object instance can be neglected. A corresponding SP3 multicast service stream is forwarded to the user and thus the user can watch the program.

The two tables also can be merged, just needing to add an ID to each item in the tables to indicate whether this item belongs to the Multicast operations profile pointer or the Allowed preview groups table. No further description is needed here.

In the embodiments of the present invention, another advantage of introducing the Multicast operations profile pointer is that, in the condition that multiple SPs provide multicast services respectively, authority control on the multicast service can be performed for the user port independently, without being limited by the original mode; thus lots of configuration messages are avoided.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

## Claims

1. A method for transmitting a multicast preview service, **characterized by** comprising:
an Optical Line Terminal, OLT, configuring a management object and/or attributes of the management object in an Optical Network Unit, ONU, wherein the management object and/or the attributes of the management object comprises at least one of the following: Multicast Operations Profile, MOP, an authorization group of Extension Multicast Operations Profile, EMOP, an Allowed preview groups table of Multicast Subscriber Control, MSC, and a preview group of EMOP, the step that the OLT configures the management object and/or the attributes of the management object in the ONU comprises:adding a Multicast service package table in an MSC management object, wherein the Multicast service package table comprises a source IP address item, a Virtual Local Area Network Identifier, VID, item and a pointer item which have a mapping relationship with each other, wherein the pointer item records a pointer pointing to an MOP management object instance or a EMOP management object instance;
the ONU receiving the multicast joining request message;
the ONU looking up, in the management object and/or the attributes of the management object, an attribute carried in a multicast joining request message according to a predetermined sequence (S102), wherein the step of looking up, in the management object and/or the attributes of the management object, the attribute carried in the multicast joining request message according to the predetermined sequence (S102) comprises: looking up the attribute carried in the multicast joining request message in the following in turn: the MOP, the authorization group of the EMOP, the Allowed preview groups table of the MSC, and the preview group of the EMOP;
forwarding or stopping forwarding to a user a service requested by the multicast joining request message according to a lookup result (S104).

2. The method according to claim 1, **characterized in that** the attribute carried in the multicast joining request message refers to a service related attribute carried in the multicast joining request message.

3. The method according to claim 1, **characterized in that** the step of looking up, in the MOP, the attribute carried in the multicast joining request message comprises:
looking up, in the MOP, the attribute carried in the multicast joining request message;
if the attribute carried in the multicast joining request message is found, forwarding the service to the user.

4. The method according to claim 1, **characterized in that** the step of looking up, in the authorization group of the EMOP, the attribute carried in the multicast joining request message comprises:
looking up, in a Multicast service package table of the MSC, the attribute carried in the multicast joining request message;
if the attribute is found, acquiring a service related attribute according to a EMOP management object instance pointer in the attribute;
if the acquired service related attribute is Authorized, forwarding the service to the user.

5. The method according to claim 1, **characterized in that** the step of looking up, in the Allowed preview groups table, the attribute carried in the multicast joining request message comprises:
looking up, in the Allowed preview groups table, the attribute carried in the multicast joining request message;
if the attribute is found, forwarding the service to the user.

6. The method according to claim 1, **characterized in that** the step of looking up, in the preview group of the EMOP, the attribute carried in the multicast joining request message comprises:
looking up, in a Multicast service package table of the MSC, the attribute carried in the multicast joining request message;
if the attribute is found, acquiring a service related attribute according to a EMOP management object instance pointer in the attribute;
if the acquired service related attribute is Preview, forwarding the service to the user.

7. The method according to any one of claims 3 to 6, **characterized in that** the step of looking up the attribute comprises:
looking up a multicast program corresponding to a Virtual Local Area Network Identifier, VID, and/or a source Internet Protocol, IP, address comprised in a service package.

8. The method according to claim 1, **characterized in that** the step that the OLT configures the management object and/or the attributes of the management object in the ONU further comprises:
adding the Allowed preview groups table in an MSC management object, wherein the Allowed preview groups table comprises a source IP address item, a destination IP address item and a VID item which have a mapping relationship with each other, and is configured to record a preview multicast channel list that a current User Network Interface, UNI, interface allows to preview.

9. The method according to claim 1, **characterized in that** after the OLT configures the management object and/or the attributes of the management object in the ONU, the method further comprises:
the OLT modifying the management object and/or the attributes of the management object configured in the ONU through a management channel.

10. The method according to claim 9, **characterized in that** the step that the OLT modifies the management object and/or the attributes of the management object configured in the ONU through the management channel comprises at least one of the following:
establishing and/or deleting, in the Allowed preview groups table of an MSC management object, an item of a EMOP management object instance indicated by the management channel;
establishing and/or deleting, in a pointer item of a Multicast service package table of the MSC management object, a pointer pointing to a EMOP management object instance indicated by an Optical Network Terminal Management and Control Interface, OMCI, command.

11. The method according to any one of claims 1, 9 to 10, **characterized in that** the management object and/or the attributes of the management object comprises: a pointer pointing to the MOP management object instance and/or the EMOP management object instance, wherein each MOP management object instance pointer and/or each EMOP management object instance corresponds to at least one multicast service, at least one Multicast service package table and at least one Allowed preview groups table.

12. A device for transmitting a multicast preview service, positioned on an Optical Network Unit, ONU, **characterized by** comprising:
a lookup unit (202), which is configured to look up, in a management object and/or attributes of the management object, an attribute carried in a multicast joining request message according to a predetermined sequence, wherein the management object and/or the attributes of the management object comprises at least one of the following: Multicast Operations Profile, MOP, an authorization group of Extension Multicast Operations Profile, EMOP, an Allowed preview groups table of Multicast Subscriber Control, MSC, and a preview group of EMOP; and
a transmission unit (204), which is configured to forward or stop forwarding to a user a service requested by the multicast joining request message according to a lookup result of the lookup unit (202);
wherein the lookup unit (202) is further configured to look up the attribute in the following in turn: the MOP, the authorization group of the EMOP, the Allowed preview groups table, and the preview group of the EMOP;
the device is further configured to configure the management object and/or the attributes of the management object according to configuration from an Optical Line Terminal, OLT, wherein the device implementing configuring the management object and/or the attributes of the management object according to the configuration from the OLT by the following steps: adding a Multicast service package table in an MSC management object, wherein the Multicast service package table comprises a source IP address item, a Virtual Local Area Network Identifier, VID, item and a pointer item which have a mapping relationship with each other, wherein the pointer item records a pointer pointing to an MOP management object instance or a EMOP management object instance.

## Patentansprüche

1. Verfahren zum Übertragen eines Multicast-Vorschaudienstes, **dadurch gekennzeichnet, dass** es umfasst:
Konfigurieren eines Verwaltungsobjekts und/oder von Attributen des Verwaltungsobjekts in einer Optical Network Unit, ONU, durch einen Optical Line Terminal, OLT, wobei das Verwaltungsobjekt und/oder die Attribute des Verwaltungsobjekts mindestens eines von Folgendem umfasst: Multicast Operations Profile, MOP, eine Berechtigungsgruppe eines Extension Multicast Operations Profile, EMOP, eine Tabelle mit erlaubten Vorschaugruppen einer Multicast Teilnehmersteuerung, MSC, und eine Vorschaugruppe von EMOP, wobei der Schritt, bei dem der OLT das Verwaltungsobjekt und/oder die Attribute des Verwaltungsobjekts in der ONU konfiguriert, umfasst: Hinzufügen einer Multicast-Dienstpakettabelle in ein MSC Verwaltungsobjekt, wobei die Multicast-Dienstpakettabelle ein Quell-IP-Adressen-Item, ein Virtual Local Area Network Identifier-, VID-Item und ein Pointer-Item umfasst, welche eine Abbildungsbeziehung miteinander aufweisen, wobei das Pointer-Item einen Pointer aufzeichnet, der auf eine MOP-Verwaltungsobjektinstanz oder eine EMOP-Verwaltungsobjektinstanz hinweist;
Empfangen der Multicast Joining Request Nachricht durch die ONU;
Suchen in dem Verwaltungsobjekt und/oder den Attributen des Verwaltungsobjekts nach einem Attribut, das in einer Multicast Joining Request Nachricht transportiert wird, durch die ONU entsprechend einer vorbestimmten Sequenz (S102), wobei der Schritt des Suchens nach einem Attribut, das in einer Multicast Joining Request Nachricht transportiert wird, entsprechend einer vorbestimmten Sequenz (S102) in dem Verwaltungsobjekt und/oder den Attributen des Verwaltungsobjekts umfasst: Suchen des Attributs, das in der Multicast Joining Request Nachricht transportiert wird nacheinander in: dem MOP, der Berechtigungsgruppe des EMOP, der Tabelle der erlaubten Vorschaugruppen der MSC, und der Vorschaugruppe des EMOP;
Weiterleiten oder Anhalten der Weiterleitung eines Dienstes, der durch die Multicast Joining Request Nachricht angefragt wurde, zu einem Nutzer, entsprechend einem Suchergebnis (S104).

2. Verfahren nach Anspruch 1, **dadurch gekennzeichnet, dass** sich das Attribut, das in der Multicast Joining Request Nachricht transportiert wird, auf ein mit einem Dienst verbundenen Attribut bezieht, das in der Multicast Joining Request Nachricht transportiert wird.

3. Verfahren nach Anspruch 1, **dadurch gekennzeichnet, dass** der Schritt des Suchens in dem MOP nach einem Attribut, das in der Multicast Joining Request Nachricht transportiert wird, umfasst:
Suchen in dem MOP nach dem Attribut, das in der Multicast Joining Request Nachricht transportiert wird;
wenn das in der Multicast Joining Request Nachricht transportierte Attribut gefunden wird, Weiterleiten des Dienstes zu dem Nutzer.

4. Verfahren nach Anspruch 1, **dadurch gekennzeichnet, dass** der Schritt des Suchens in der Berechtigungsgruppe des EMOP nach dem Attribut, das in der Multicast Joining Request Nachricht transportiert wird, umfasst:
Suchen in einer Multicast-Dienstpakettabelle der MSC nach dem Attribut, das in der Multicast Joining Request Nachricht transportiert wird;
wenn das Attribut gefunden wird, Akquirieren eines mit einem Dienst verbundenen Attributs entsprechend einem EMOP-Verwaltungsobjektinstanz-Pointer in dem Attribut;
wenn das mit einem Dienst verbundene Attribut berechtigt ist, Weiterleiten des Dienstes zu dem Nutzer.

5. Verfahren nach Anspruch 1, **dadurch gekennzeichnet, dass** der Schritt des Suchens in der Tabelle der erlaubten Vorschaugruppen nach dem Attribut, das in der Multicast Joining Request Nachricht transportiert wird, umfasst:
Suchen in der Tabelle der erlaubten Vorschaugruppen nach dem Attribut, das in der Multicast Joining Request Nachricht transportiert wird;
wenn das Attribut gefunden wird, Weiterleiten des Dienstes an den Nutzer.

6. Verfahren nach Anspruch 1, **dadurch gekennzeichnet, dass** der Schritt des Suchens in der Vorschaugruppe des EMOP nach dem Attribut, das in der Multicast Joining Request Nachricht transportiert wird, umfasst:
Suchen in einer Multicast Dienstpakettabelle der MSC nach dem Attribut, das in der Multicast Joining Request Nachricht transportiert wird;
wenn das Attribut gefunden wird, Akquirieren eines mit dem Dienst verbundenen Attributs entsprechend einem EMOP-Verwaltungsobjektinstanz-Pointer in dem Attribut;
wenn das mit einem Dienst verbundene Attribut Vorschau ist, Weiterleiten des Dienstes zu dem Nutzer.

7. Verfahren nach einem der Ansprüche 3 bis 6, **dadurch gekennzeichnet, dass** der Schritt des Suchens nach dem Attribut umfasst:
Suchen nach einem Multicast-Programm entsprechend einem Virtual Local Area Network Identifier, VID, und/oder einer Quell-Internet-Protocol-, IP-Adresse, die in einem Dienstpaket enthalten ist.

8. Verfahren nach Anspruch 1, **dadurch gekennzeichnet, dass** der Schritt des Konfigurierens des Verwaltungsobjekts und/oder der Attribute des Verwaltungsobjekts in der ONU durch den OLT, weiter umfasst:
Hinzufügen der Tabelle der erlaubten Vorschaugruppen in ein MSC Verwaltungsobjekt, wobei die Tabelle der erlaubten Vorschaugruppen ein Quell-IP-Adressen-Item, Destinations-IP-Adressen-Item und ein VID-Item umfasst, welche eine Abbildungsbeziehung miteinander aufweisen, und konfiguriert, um eine Vorschau-Multicast-Kanalliste aufzuzeichnen, deren Vorschau durch eine aktuelle User Network Interface-, UNI-Schnittstelle erlaubt wird.

9. Verfahren nach Anspruch 1, **dadurch gekennzeichnet, dass** nach dem Konfigurieren des Verwaltungsobjekts und/oder der Attribute des Verwaltungsobjekts in der ONU durch den OLT, das Verfahren weiter umfasst:
Ändern des Verwaltungsobjekts und/oder der Attribute des Verwaltungsobjekts, die in der ONU konfiguriert worden sind, durch den OLT anhand eines Verwaltungskanals.

10. Verfahren nach Anspruch 9, **dadurch gekennzeichnet, dass** der Schritt des Änderns des Verwaltungsobjekts und/oder der Attribute des Verwaltungsobjekts, die in der ONU konfiguriert worden sind, durch den OLT anhand des Verwaltungskanals mindestens eines von Folgendem umfasst:
Erstellen und/oder Löschen in der Tabelle der erlaubten Vorschaugruppen eines MSC Verwaltungsobjekts, eines Items einer EMOP Verwaltungsobjektinstanz, die durch den Verwaltungskanal angezeigt wird;
Erstellen und/oder Löschen in einem Pointer-Item einer Multicast Dienstpakettabelle des MSC Verwaltungsobjekts, eines Pointers, der auf eine EMOP Verwaltungsobjektinstanz hinweist, die durch einen Befehl einer Optical Network Terminal Verwaltungs- und Steuerungs-, OMCI-Schnittstelle, angezeigt wird.

11. Verfahren nach einem der Ansprüche 1, 9 bis 10, **dadurch gekennzeichnet, dass** das Verwaltungsobjekt und/oder die Attribute des Verwaltungsobjekts umfasst:
einen Pointer, der auf die MOP Verwaltungsobjektinstanz und/oder die EMOP Verwaltungsobjektinstanz hinweist, wobei jeder MOP Verwaltungsobjektinstanz-Pointer und/oder jede EMOP Verwaltungsobjektinstanz mindestens einem Multicast Dienst, mindestens einer Multicast Dienstpakettabelle und mindestens einer Tabelle der erlaubten Vorschaugruppen entspricht.

12. Vorrichtung zum Übertragen eines Multicast-Vorschaudienstes, der auf einer Optical Network Unit, ONU, positioniert ist, **dadurch gekennzeichnet, dass** sie umfasst:
eine Sucheinheit (202), welche konfiguriert ist, um entsprechend einer vorbestimmten Sequenz, in einem Verwaltungsobjekt und/oder Attributen des Verwaltungsobjekts nach einem Attribut zu suchen, das in einer Multicast Joining Request Nachricht transportiert wird, wobei das Verwaltungsobjekt und/oder die Attribute des Verwaltungsobjekts mindestens eines von Folgendem umfasst: Multicast Operations Profile, MOP, eine Berechtigungsgruppe eines Extension Multicast Operations Profile, EMOP, eine Tabelle mit erlaubten Vorschaugruppen einer Multicast Teilnehmersteuerung, MSC, und eine Vorschaugruppe von EMOP; und
eine Übertragungseinheit (204), welche konfiguriert ist, um einen Dienst, der durch die Multicast Joining Request Nachricht angefragt wurde, entsprechend einem Suchergebnis der Sucheinheit (202) zu einem Nutzer weiterzuleiten oder dessen Weiterleitung anzuhalten;
wobei die Sucheinheit (202) weiter konfiguriert ist, um nach dem Attribut nacheinander zu suchen in: dem MOP, der Berechtigungsgruppe des EMOP, der Tabelle der erlaubten Vorschaugruppen der MSC, und der Vorschaugruppe des EMOP;
wobei die Vorrichtung weiter konfiguriert ist, um das Verwaltungsobjekt und/oder die Attribute des Verwaltungsobjekts entsprechend einer Konfiguration von einem Optical Line Terminal, OLT, zu konfigurieren, wobei die Vorrichtung das Konfigurieren des Verwaltungsobjekts und/oder der Attribute des Verwaltungsobjekts entsprechend der Konfiguration von dem OLT durch die folgenden Schritte einbezieht: Hinzufügen einer Multicast-Dienstpakettabelle in ein MSC Verwaltungsobjekt, wobei die Multicast-Dienstpakettabelle ein Quell-IP-Adressen-Item, ein Virtual Local Area Network Identifier-, VID-Item und ein Pointer-Item umfasst, welche eine Abbildungsbeziehung miteinander aufweisen, wobei das Pointer-Item einen Pointer aufzeichnet, der auf eine MOP-Verwaltungsobjektinstanz oder eine EMOP-Verwaltungsobjektinstanz hinweist.

## Revendications

1. Procédé de transmission d'un service de prévisualisation de multidiffusion, **caractérisé en ce qu'**il comprend :
la configuration, par un terminal de ligne optique, OLT, d'un objet de gestion et/ou d'attributs de l'objet de gestion dans une unité de réseau optique, ONU, dans lequel l'objet de gestion et/ou les attributs de l'objet de gestion comprennent au moins l'un de ce qui suit : un profil d'opérations de multidiffusion, MOP, un groupe d'autorisation de profil d'opérations de multidiffusion d'extension, EMOP, un tableau de groupes de prévisualisation autorisés de commande d'abonné de multidiffusion, MSC, et un groupe de prévisualisation d'EMOP, l'étape à laquelle l'OLT configure l'objet de gestion et/ou les attributs de l'objet de gestion dans l'ONU comprend : l'ajout d'un tableau d'ensembles de services de multidiffusion dans un objet de gestion MSC, dans lequel le tableau d'ensembles de services de multidiffusion comprend un élément d'adresse IP de source, un élément d'identifiant de réseau local virtuel, VID, et un élément de pointeur qui ont une relation de mise en concordance entre eux, dans lequel l'élément de pointeur enregistre un pointeur pointant vers une instance d'objet de gestion MOP ou une instance d'objet de gestion EMOP ;
la réception, par l'ONU, du message de demande d'adhésion à la multidiffusion ;
la recherche, par l'ONU, dans l'objet de gestion et/ou dans les attributs de l'objet de gestion, d'un attribut porté dans un message de demande d'adhésion à la multidiffusion en fonction d'une séquence prédéterminée (S102), dans lequel l'étape de la recherche, dans l'objet de gestion et/ou dans les attributs de l'objet de gestion, de l'attribut porté dans le message de demande d'adhésion à la multidiffusion en fonction de la séquence prédéterminée (S102) comprend : la recherche de l'attribut porté dans le message de demande de jonction de multidiffusion dans ce qui suit à tour de rôle : le MOP, le groupe d'autorisation de l'EMOP, le tableau de groupes de prévisualisation autorisés de la MSC, et le groupe de prévisualisation de l'EMOP ;
le transfert ou l'arrêt du transfert, à un utilisateur, d'un service demandé par le message de demande d'adhésion à la multidiffusion en fonction d'un résultat de recherche (S104).

2. Procédé selon la revendication 1, **caractérisé en ce que** l'attribut porté dans le message de demande d'adhésion à la multidiffusion fait référence à un attribut lié au service porté dans le message de demande d'adhésion à la multidiffusion.

3. Procédé selon la revendication 1, **caractérisé en ce que** l'étape de la recherche, dans le MOP, de l'attribut porté dans le message de demande d'adhésion à la multidiffusion comprend :
la recherche, dans le MOP, de l'attribut porté dans le message de demande d'adhésion à la multidiffusion ;
si l'attribut porté dans le message de demande d'adhésion à la multidiffusion est trouvé, le transfert du service à l'utilisateur.

4. Procédé selon la revendication 1, **caractérisé en ce que** l'étape de la recherche, dans le groupe d'autorisation de l'EMOP, de l'attribut porté dans le message de demande d'adhésion à la multidiffusion comprend :
la recherche, dans un tableau d'ensembles de services de multidiffusion de la MSC, de l'attribut porté dans le message de demande d'adhésion à la multidiffusion ;
si l'attribut est trouvé, l'acquisition d'un attribut lié au service en fonction d'un pointeur d'instance d'objet de gestion EMOP dans l'attribut ;
si l'attribut lié au service acquis est autorisé, le transfert du service à l'utilisateur.

5. Procédé selon la revendication 1, **caractérisé en ce que** l'étape de la recherche, dans le tableau de groupes de prévisualisation autorisés, de l'attribut porté dans le message de demande d'adhésion à la multidiffusion comprend :
la recherche, dans le tableau de groupes de prévisualisation autorisés, de l'attribut porté dans le message de demande d'adhésion à la multidiffusion ;
si l'attribut est trouvé, le transfert du service à l'utilisateur.

6. Procédé selon la revendication 1, **caractérisé en ce que** l'étape de la recherche, dans le groupe de prévisualisation de l'EMOP, de l'attribut porté dans le message de demande d'adhésion à la multidiffusion comprend :
la recherche, dans un tableau d'ensembles de services de multidiffusion de la MSC, de l'attribut porté dans le message de demande d'adhésion à la multidiffusion ;
si l'attribut est trouvé, l'acquisition d'un attribut lié au service en fonction d'un pointeur d'instance d'objet de gestion EMOP dans l'attribut ;
si l'attribut lié au service acquis est prévisualisation, le transfert du service à l'utilisateur.

7. Procédé selon l'une quelconque des revendications 3 à 6, **caractérisé en ce que** l'étape de la recherche de l'attribut comprend :
la recherche d'un programme de multidiffusion correspondant à un identifiant de réseau local virtuel, VID, et/ou à une adresse de protocole Internet, IP, de source comprise dans un ensemble de services.

8. Procédé selon la revendication 1, **caractérisé en ce que** l'étape de la configuration, par l'OLT, de l'objet de gestion et/ou des attributs de l'objet de gestion dans l'ONU comprend en outre :
l'ajout du tableau de groupes de prévisualisation autorisés dans un objet de gestion MSC, dans lequel le tableau de groupes de prévisualisation autorisés comprend un élément d'adresse IP de source, un élément d'adresse IP de destination et un élément VID ayant une relation de mise en concordance entre eux, et est configuré pour enregistrer une liste de canaux de multidiffusion de prévisualisation qu'une interface de réseau d'utilisateur, UNI, actuelle permet de prévisualiser.

9. Procédé selon la revendication 1, **caractérisé en ce que**, après que l'OLT configure l'objet de gestion et/ou les attributs de l'objet de gestion dans l'ONU, le procédé comprend en outre :
la modification, par l'OLT, de l'objet de gestion et/ou des attributs de l'objet de gestion configurés dans l'ONU par l'intermédiaire d'un canal de gestion.

10. Procédé selon la revendication 9, **caractérisé en ce que** l'étape de la modification, par l'OLT, de l'objet de gestion et/ou des attributs de l'objet de gestion configurés dans l'ONU par l'intermédiaire du canal de gestion comprend au moins l'un de ce qui suit :
l'établissement et/ou la suppression, dans le tableau de groupes de prévisualisation autorisés d'un objet de gestion MSC, d'un élément d'une instance d'objet de gestion EMOP indiquée par le canal de mesure ;
l'établissement et/ou la suppression, dans un élément de pointeur d'un tableau d'ensembles de services de multidiffusion de l'objet de gestion MSC, d'un pointeur pointant vers une instance d'objet de gestion EMOP indiquée par une commande d'interface de gestion et de commande de terminal de réseau optique, OMCI.

11. Procédé selon l'une quelconque des revendications 1, 9 à 10, **caractérisé en ce que** l'objet de gestion et/ou les attributs de l'objet de gestion comprennent : un pointeur pointant vers l'instance d'objet de gestion MOP et/ou l'instance d'objet de gestion EMOP, dans lequel chaque pointeur d'instance d'objet de gestion MOP et/ou chaque instance d'objet de gestion EMOP correspondent à au moins un service de multidiffusion, au moins un tableau d'ensembles de services de multidiffusion et au moins un tableau de groupes de prévisualisation autorisés.

12. Dispositif de transmission d'un service de prévisualisation de multidiffusion, positionné sur une unité de réseau optique, ONU, **caractérisé en ce qu'**il comprend :
une unité de recherche (202), qui est configurée pour rechercher, dans un objet de gestion et/ou des attributs de l'objet de gestion, un attribut porté dans un message de demande d'adhésion à la multidiffusion en fonction d'une séquence prédéterminée, dans lequel l'objet de gestion et/ou les attributs de l'objet de gestion comprennent au moins l'un de ce qui suit : un profil d'opérations de multidiffusion, MOP, un groupe d'autorisation de profil d'opérations de multidiffusion d'extension, EMOP, un tableau de groupes de prévisualisation autorisés de commande d'abonné de multidiffusion, MSC, et un groupe de prévisualisation d'EMOP ; et
une unité de transmission (204), qui est configurée pour transférer ou pour arrêter de transférer, à un utilisateur, un service demandé par le message de demande d'adhésion à la multidiffusion en fonction d'un résultat de recherche de l'unité de recherche (202) ;
dans lequel l'unité de recherche (202) est en outre configurée pour rechercher l'attribut dans ce qui suit à tour de rôle : le MOP, le groupe d'autorisation de l'EMOP, le tableau de groupes de prévisualisation autorisés, et le groupe de prévisualisation de l'EMOP ;
le dispositif est en outre configuré pour configurer l'objet de gestion et/ou les attributs de l'objet de gestion en fonction d'une configuration d'un terminal de ligne optique, OLT, dans lequel le dispositif mettant en oeuvre la configuration de l'objet de gestion et/ou des attributs de l'objet de gestion en fonction de la configuration de l'OLT par les étapes suivantes : l'ajout d'un tableau d'ensembles de services de multidiffusion dans un objet de gestion MSC, dans lequel le tableau d'ensembles de services de multidiffusion comprend un élément d'adresse IP de source, un élément d'identifiant de réseau local virtuel, VID, et un élément de pointeur qui ont une relation de mise en concordance entre eux, dans lequel l'élément de pointeur enregistre un pointeur pointant vers une instance d'objet de gestion MOP ou une instance d'objet de gestion EMOP.
